# EUROPÄISCHE PATENTSCHRIFT

(11) **EP 2 079 621 B1**
(45) Veröffentlichungstag und Bekanntmachung des Hinweises auf die Patenterteilung: **30.06.2021**
(21) Anmeldenummer: 07788410.4
(22) Anmeldetag: 14.08.2007
(51) Int. Cl.: B60W 20/00, B60W 10/02, B60W 10/06, B60W 10/08, B60K 6/26, B60L 50/16, B60K 6/48

(54) **VERFAHREN FÜR DIE STEUERUNG EINES HYBRIDANTRIEBS**
METHOD FOR CONTROLLING A HYBRID DRIVE
PROCÉDÉ DE COMMANDE D'UN ENTRAÎNEMENT HYBRIDE

(30) Priorität: 12.10.2006 DE 102006048358
(43) Veröffentlichungstag der Anmeldung: 22.07.2009
(73) Patentinhaber: Robert Bosch GmbH, 70442 Stuttgart (DE)
(72) Erfinder: SCHENK, Rene, 71732 Tamm (DE); KAEFER, Oliver, 71711 Murr (DE); JUENEMANN, Thorsten, 71069 Sindelfingen (DE)
(86) Internationale Anmeldenummer: PCT/EP2007/058390
(87) Internationale Veröffentlichungsnummer: WO 2008/043593

(56) Entgegenhaltungen:
- EP-A- 1 860 012
- WO-A-2005/100777
- DE-A1- 10 316 422
- DE-A1- 19 838 853
- DE-A1-102006 005 468
- None

## Beschreibung

### Stand der Technik

Die Erfindung betrifft ein Verfahren für die Steuerung eines Hybridantriebs eines Fahrzeugs nach dem Oberbegriff des Anspruchs 1. Der gattungsgemäße Hybridantrieb umfasst mindestens einen Verbrennungsmotor, mindestens eine elektrische Maschine und mindestens je eine Kupplung zwischen der Verbrennungsmotor und der elektrischen Maschine, sowie zwischen der elektrischen Maschine und dem anschließenden Antriebsstrang des Fahrzeugs. Im Rahmen der Weiterentwicklung bestehender Antriebskonzepte im Automobilbereich hinsichtlich der Verbrauchsoptimierung, der Emissionsreduktion und der Verbesserung des subjektiven Fahrempfindens gewinnen Hybridantriebe zunehmend an Bedeutung. Diese besitzen neben dem Verbrennungsmotor noch mindestens eine weitere Antriebsquelle, welche nicht mit fossilen Brennstoffen betrieben wird. Durch eine geeignete Betriebsstrategie können die Vorteile der unterschiedlichen Antriebsquellen optimal ausgenutzt und Nachteile ausgeglichen werden. Die Kombination eines Verbrennungsmotors mit elektrischen Maschinen als alternative Antriebsquellen ist dabei die dominante Variante innerhalb des Automobilsektors. Eine Reihe von unterschiedlichen Hybrid-Fahrzeugen ist als Serien- oder seriennahe Konstruktion bereits ausgeführt. Allen ist gemeinsam, dass sie gegenüber konventionell verbrennungsmotorisch angetriebenen Fahrzeugen weniger Kraftstoff verbrauchen. Die Verbrauchseinsparung ist auf die hybridspezifischen Möglichkeiten der Rekuperation von Energie beim Bremsen sowie auf die Realisierung von Start-Stopp-Funktionen zurückzuführen. Beim Hybridantrieb unterscheidet man zwischen Parallel-, Seriell- und Split-Hybrid. Allen gemeinsam ist die Verwendung zweier Energiespeicher, einer Batterie und einem Kraftstofftank. Als Alternative zur Batterie sind auch Kondensatoren als Energiespeicher denkbar. Ein weiteres Unterscheidungsmerkmal bei Hybridantrieben ist die Leistungsfähigkeit der elektrischen Maschinen. Man trennt dabei zwischen Mild- und Full-Hybrid-Varianten, wobei unter einem so genannten Full-Hybrid ein Fahrzeug zu verstehen ist, das zumindest teilweise in der Lage ist, mit rein elektrischem Antrieb zu fahren. So genannte leistungsverzweigende Hybridantriebe bleiben für die vorliegende Erfindung außer Betracht, da dort der Startvorgang anders abläuft und sich daher das der Erfindung zugrunde liegende Problem nicht stellt. Weiter bekannt sind so genannte Startergeneratoren. Da bei diesen jedoch die elektrische Maschine fest mit der Kurbelwelle des Fahrzeugs verbunden ist, stellt sich das Problem der Synchronisation im Betrieb nicht.

Die Druckschrift DE 198 38 853 offenbart eine Hybridantriebsvorrichtung für ein Fahrzeug, die in der Lage ist, das Ansprechen beim Wiederanlassen des Verbrennungsmotors während der elektrischen Fahrt des Fahrzeugs zu verbessern, um einen Stoß infolge einer Verzögerung des Fahrzeugs durch eine entsprechende Kupplungssteuerung zu verhindern.

### Offenbarung der Erfindung

### Technische Aufgabe

Der Erfindung liegt die Aufgabe zugrunde, den Kupplungsvorgang bei einem Fahrzeug mit als Parallelhybrid ausgegestaltetem Hybridantrieb zu verbessern.

### Technische Lösung

Diese Aufgabe wird durch die in Anspruch 1 genannten Merkmale gelöst.

### Vorteilhafte Wirkungen

Die Erfindung ermöglicht eine Verbesserung des Kupplungsvorgangs bei einem Fahrzeug, das mit einem als Parallelhybrid ausgestalteten Hybridantrieb ausgestattet ist. Dabei ist zwischen dem Verbrennungsmotor und einer elektrischen Maschine eine als Proportionalkupplung ausgebildete zusätzliche Kupplung vorgesehen. Eine derartige Konfiguration erlaubt den Antrieb des Fahrzeugs mit der elektrischen Maschine im geöffneten Zustand dieser zusätzlichen Kupplung. Das Problem dabei ist, dass bei höherem Leistungsbedarf oder abnehmendem Ladezustand der Batterie der Verbrennungsmotor gestartet werden muss, ohne Störungen in dem Antriebsstrang hervorzurufen. Das Starten des Verbrennungsmotors wird durch Schließen dieser zusätzlichen Kupplung erreicht. Dabei muss diese Kupplung jedoch so gesteuert werden, dass einerseits das Drehmoment ausreicht, um den Verbrennungsmotor auf eine für einen erfolgreichen Start erforderliche Drehzahl zu bringen. Andererseits soll das für die Beschleunigung des Verbrennungsmotors verwendete Drehmoment möglichst niedrig sein, da es von der elektrischen Maschine zusätzlich aufgebracht und als Reserve vorgehalten werden muss. Die Erfindung ermöglicht eine Optimierung dieses Kupplungsvorgangs, obwohl der genannte Kupplungstyp infolge Exemplarstreuungen, Temperatur- und Alterungseinflüssen eine große Toleranz aufweist. Weiterhin können auch von der Temperatur und Alterung abhängige Drehmomenthänderungen des Verbrennungsmotors berücksichtigt werden.

Weitere Vorteile ergeben sich aus der Beschreibung, der Zeichnung und den Unteransprüchen.

### Kurze Beschreibung der Zeichnungen

Ausführungsformen der Erfindung werden nachfolgend unter Bezug auf die Zeichnung näher erläutert. Dabei zeigt:
- Figur 1: in schematischer Darstellung ein Fahrzeug mit Hybridantrieb;
- Figur 2: in einem Diagramm Drehzahl und Schlupfmoment als Funktion der Zeit;
- Figur 3: in einem Diagramm Drehzahl und Schlupfmoment als Funktion der Zeit;
- Figur 4: in einem Diagramm Drehzahl und Schlupfmoment als Funktion der Zeit;
- Figur 5: in einem Diagramm Drehzahl und Schlupfmoment als Funktion der Zeit;
- Figur 6: in einem Diagramm Drehzahl und Schlupfmoment als Funktion der Zeit;
- Figur 7: in einem Diagramm Drehzahl und Schlupfmoment als Funktion der Zeit;
- Figur 8: ein Kennfeld.

### Ausführungsformen der Erfindung

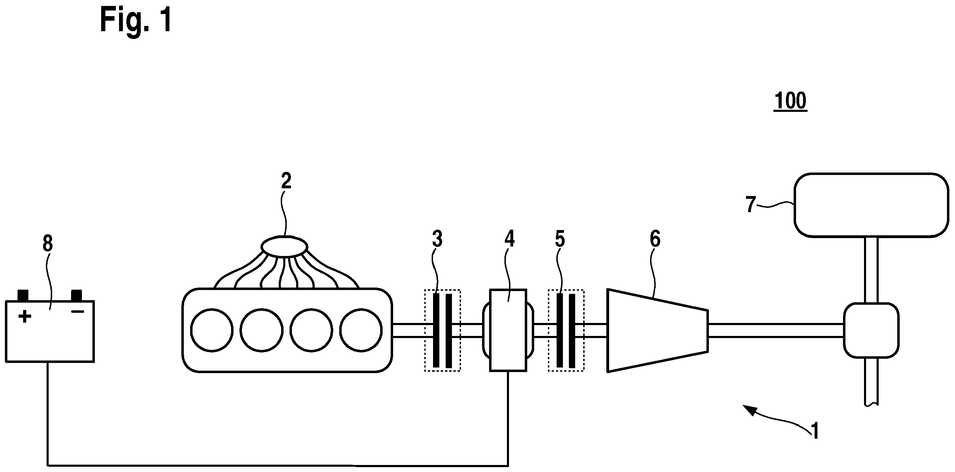

Ausführungsformen der Erfindung werden im Folgenden unter Bezug auf die Zeichnung näher erläutert. Figur 1 zeigt, in einer schematischen Darstellung, ein Fahrzeug 100 mit einem Hybridantrieb 1. Der Hybridantrieb 1 umfasst einen herkömmlichen Verbrennungsmotor 2 und eine elektrische Maschine 4. Zwischen der elektrischen Maschine 4 und dem schematisch dargestellten, mit Bezugsziffer 6 bezeichneten Antriebsstrang, ist eine erste Kupplung 5 angeordnet. Zwischen dem Verbrennungsmotor 2 und der elektrischen Maschine 4 ist eine zweite Kupplung 3 angeordnet. Hierbei handelt es sich vorzugsweise um eine Proportionalkupplung. Das Fahrwerk des Fahrzeugs 100 ist durch ein Rad 7 und einen Teil einer Achse mit Differential angedeutet. Mit Bezugsziffer 8 ist eine Batterie bezeichnet, die die elektrische Maschine 4 mit Energie versorgt. Weitere Komponenten des Bordnetzes sind in Figur 1 nicht dargestellt. Der in Figur 1 dargestellte Hybridantrieb 1 ermöglicht einen rein elektrischen Antrieb des Fahrzeugs 100 mit der elektrischen Maschine 4. Dabei ist die zwischen dem Verbrennungsmotor 2 und der elektrischen Maschine 4 angeordnete zweite Kupplung 3 geöffnet. Wenn nun aber der Ladezustand der Batterie 8 zu stark absinkt oder aber ein höherer Leistungsbedarf erforderlich ist, muss der Verbrennungsmotor 2 gestartet werden. Dies wird durch ein Schließen der zweiten Kupplung 3 ermöglicht. Dies sollte jedoch möglichst keine Störungen in dem Antriebsstrang 6 des Fahrzeugs 100 verursachen. Dazu wird die Kupplung 3 auf ein definiertes Schlupfmoment gesteuert. Mit diesem Schlupfmoment wird der Verbrennungsmotor 2 beschleunigt, bis er die gleiche Drehzahl wie die elektrische Maschine 4 erreicht hat. Dann wird die Kupplung 3 vollständig geschlossen und der Verbrennungsmotor 2 kann ein Drehmoment auf den Antriebstrang 6 des Fahrzeugs 1 übertragen. Das zusätzliche Moment während der Schlupfphase, im Folgenden auch Schlupfmoment genannt, muss durch die elektrische Maschine 4 bereitgestellt werden. Die Kupplung 3 muss dabei so gesteuert werden, dass einerseits das durch sie auf den Verbrennungsmotor 2 übertragene Drehmoment ausreicht, um den Verbrennungsmotor 2 auf die für einen erfolgreichen Start erforderliche Drehzahl zu bringen. Andererseits soll das für die Beschleunigung des Verbrennungsmotors 2 erforderliche Drehmoment möglichst niedrig sein, da es von der elektrischen Maschine 4 zusätzlich aufgebracht und daher als Reserve vorgehalten werden muss.

Problematisch für die richtige Einstellung des Schlupfmoments ist, dass die verwendete Kupplungsart eine vergleichsweise große Toleranz hat. Dafür sind sowohl Exemplarstreuungen als auch Temperatur- und Alterungseinflüsse verantwortlich. Beispielsweise kann sich der Reibwert mit zunehmendem Alter der Kupplung 3 verändern.

Üblicherweise erfolgt eine Vorgabe des Schlupfmoments nur über die Anpresskraft, da eine präzise Messung des Schlupfmoments und dessen Steuerung in Abhängigkeit von der Messung in der Praxis viel zu aufwändig wäre. Zusätzlich kann sich auch noch das für den erfolgreichen Start des Verbrennungsmotors 2 erforderliche Drehmoment in Abhängigkeit von Temperatur und Lebensdauer ändern.

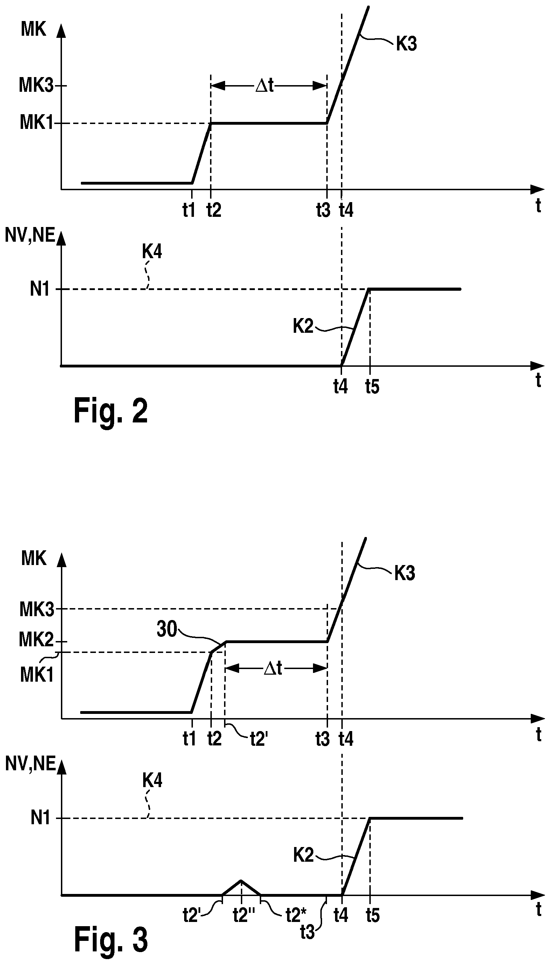

Der nachteilige Effekt eines zu niedrigen Schlupfmoments wird im Folgenden unter Bezug auf die in Figur 2 dargestellten Diagramme erläutert. Das in dem oberen Teil der Figur 2 dargestellte Diagramm zeigt das Kupplungsmoment MK als Funktion der Zeit t. Die Kurve K3 repräsentiert dabei das Kupplungsmoment der Kupplung 3 in Figur 1. Das in dem unteren Teil der Figur 2 dargestellte Diagramm zeigt die Drehzahlen NE,NV als Funktion der Zeit t. Mit NE ist dabei die Drehzahl der elektrischen Maschine 4 und mit NV die Drehzahl des Verbrennungsmotors 2 bezeichnet. Dabei zeigt die Kurve K2 die Drehzahl des Verbrennungsmotors 2 und die Kurve K4 die Drehzahl der elektrischen Maschine 4 als Funktion der Zeit t. Es werde angenommen, dass das Fahrzeug 100 bis zu dem Zeitpunkt t1 ausschließlich von der elektrischen Maschine 4 angetrieben wird. Zu diesem Zeitpunkt wird festgestellt, dass eine höhere Leistung gefordert wird, die ausschließlich von der elektrischen Maschine 4 nicht mehr aufgebracht werden kann. Diese höhere Leistung soll von dem Verbrennungsmotor 2 aufgebracht werden, der deshalb gestartet werden muss. Der Start wird durch Steuerung der Kupplung 3 eingeleitet. Durch teilweises Schließen der Kupplung 3 wird ein Schlupfmoment MK1 eingestellt, das zu dem Zeitpunkt t2 anliegt. Obwohl Schlupf stattfindet und die elektrische Maschine 4 mit der Drehzahl N1 rotiert (siehe Kurve K4), zeigt die Kurve K2 dass der Verbrennungsmotor 2 in Ruhelage verharrt. Das eingestellte Schlupfmoment MK1 reicht also nicht aus, um das Losreißmoment des Verbrennungsmotors 2 zu überwinden. Unter Losreißmoment ist dasjenige Moment zu verstehen, das benötigt wird, um den Verbrennungsmotor 2 erfolgreich zu komprimieren. Diese Situation wird von dem Steuerungssystem des Hybridantriebs 1 nach Ablauf eines vorgebbaren Zeitintervalls Δt zum Zeitpunkt t3 festgestellt. Beispielsweise dadurch, dass bei dem Erreichen des Schlupfmoments MK1 zum Zeitpunkt t2 ein Zeitglied mit der Zeitkonstante Δt gestartet wird. Zum Zeitpunkt t3 wird daher das Schlupfmoment weiter auf den Wert MK3 erhöht, mit der Folge, dass, wie die Kurve K2 zeigt, der Verbrennungsmotor 2 in Rotation versetzt wird und zu dem Zeitpunkt t5 die Drehzahl N1 der elektrischen Maschine 4 erreicht. Nun kann von einem erfolgreichen Start des Verbrennungsmotors 2 ausgegangen werden. Nachteilig sind hierbei eine Verlängerung der Startzeit, ein erhöhter Energieverbrauch für die verlängerte Schlupfphase und ein erhöhter Kupplungsverschleiß.

Es könnte nun versucht werden, das Kupplungsmoment MK schnell auf einen Minimalwert zu fahren, dieses dann mit einer Rampe weiter zu erhöhen, bis sich der Verbrennungsmotor 2 zu drehen beginnt und dann wieder einzufrieren. Dies wird im Folgenden anhand der in Figur 3 dargestellten Diagramme erläutert. Dabei zeigt das Diagramm in dem oberen Teil der Figur 3 wiederum das Kupplungsmoment MK als Funktion der Zeit t. Das Diagramm in dem unteren Teil der Figur 3 zeigt die Drehzahl N als Funktion der Zeit t. Dabei zeigt die Kurve K2 die Drehzahl des Verbrennungsmotors 2 und die Kurve K4 die Drehzahl der elektrischen Maschine 4. Es werde angenommen, dass das Fahrzeug 100 bis zu dem Zeitpunkt t1 ausschließlich von der elektrischen Maschine 4 angetrieben wird. Zu diesem Zeitpunkt wird festgestellt, dass eine höhere Leistung gefordert wird, die ausschließlich von der elektrischen Maschine 4 nicht mehr aufgebracht werden kann. Diese höhere Leistung soll von dem Verbrennungsmotor 2 aufgebracht werden, der deshalb gestartet werden muss. Der Start wird durch Steuerung der Kupplung 3 eingeleitet. Durch teilweises Schließen der Kupplung 3 wird ein Schlupfmoment MK1 eingestellt, das zu dem Zeitpunkt t2 anliegt. Da sich der Verbrennungsmotor 2 immer noch nicht in Bewegung gesetzt hat, wird zum Zeitpunkt t2 das Schlupfmoment weiter erhöht. Dies kann beispielsweise entlang einer Rampe 30 erfolgen, die das Schlupfmoment linear ansteigen lässt. Zum Zeitpunkt t2' erreicht das Schlupfmoment den Wert MK2 und der Verbrennungsmotor 2 beginnt sich zu drehen. Das Schlupfmoment MK2 wird daraufhin konstant gehalten. Doch bereits zum Zeitpunkt t2" fällt die Drehzahl des Verbrennungsmotors 2 wieder ab und er kommt zum Zeitpunkt t2* wieder zum Stehen. Der Startversuch war also erfolglos. Dies kann darauf zurückzuführen sein, dass, in Abhängigkeit von der Abstellposition der Kurbelwelle, mit dem Verbrennungsmotor 2 zunächst ein Rotationsbeginn erreicht werden konnte, die Rotation aber mit zunehmender Kompression wieder zum Stillstand kam. Erst wenn, analog zu Figur 2, nach Ablauf eines durch ein Zeitglied bestimmten Zeitintervalls Δt, das Schlupfmoment auf den Wert MK3 angehoben wird, gelingt es, den Verbrennungsmotor 2 in Rotation zu versetzen. Zum Zeitpunkt t5 hat der Verbrennungsmotor 2 wiederum die Drehzahl N1 der elektrischen Maschine 4 erreicht. Erst jetzt ist von einem erfolgreichen Start des Verbrennungsmotors 2 auszugehen. Auch hierbei ist wiederum eine Verlängerung der Startzeit in Kauf zu nehmen. Weiterhin kann es häufiger zu einem Drehbeginn des Verbrennungsmotors 2 kommen. Dieser bleibt jedoch vor dem Erreichen seiner Kompressionsstellung wieder stehen.

Im Folgenden wird erläutert, auf welche Weise erfindungsgemäß das Kupplungsmoment angepasst wird, um schnellstmöglich einen zuverlässigen Start des Verbrennungsmotors zu erreichen. Hier wird zunächst der Fall betrachtet, dass der Triebstrang 6 nicht angekuppelt ist, die Kupplung 5 also getrennt ist. Bei einem Automatgetriebe würde dies der Stellung P oder N entsprechen. Da keine sonstige Belastung auf die elektrische Maschine 4 wirkt, besteht die einzige Möglichkeit, das Kupplungsmoment der Kupplung 3 mit dem Moment der elektrischen Maschine 4 abzugleichen. Dazu wird, bei stehender elektrischer Maschine 4, zunächst die Kupplung 3 geschlossen. Anschließend werden die elektrische Maschine 4 und der Verbrennungsmotor 2 gemeinsam auf Drehzahl gebracht. Für den Abgleich wird die Kupplung 3 vor Einleitung des Startvorgangs auf einen Wert gebracht, der unterhalb des normal für den Start vorgesehenen Schlupfmoments liegt. Zum Beispiel auf 90%. Dann wird die elektrische Maschine 4 auf Drehzahl gebracht. Startet der Verbrennungsmotor 2 dabei, dann wird der Sollwert für die Zukunft verringert. Falls der Verbrennungsmotor 2 nicht startet, wird das Kupplungsmoment, beispielsweise entlang einer Rampe, erhöht, bis der Verbrennungsmotor 2 startet. Das dafür erforderliche Kupplungsmoment wird gespeichert und, ggf. um einen Sicherheitszuschlag erhöht, als neuer Sollwert des Schlupfmoments gespeichert. Gleichzeitig wird das für den Start des Verbrennungsmotors 2 benötigte Drehmoment der elektrischen Maschine 4 gespeichert. Aus dem Verhältnis von Kupplungsmoment der Kupplung 3 und dem Drehmoment der elektrischen Maschine 4 wird dann ein Korrekturfaktor ermittelt, der für die Steuerung des Drehzahlreglers verwendet wird. Um die Startzeit so kurz wie möglich zu halten, ist es zweckmäßig, mit diesem Test knapp unter dem zu erwartenden Wert des Drehmoments der Kupplung 3 zu beginnen. Dadurch kann zwar jeweils nur eine kleine Korrektur vorgenommen werden, aber man muss die Rampe nicht lange laufen lassen, um einen erfolgreichen Start des Verbrennungsmotors 2 zu erreichen.

Sofern der Verbrennungsmotor 2 während des Betriebs des Fahrzeugs 100 wieder gestartet werden muss, ist erfindungsgemäß folgende Vorgehensweise zweckmäßig. Sobald bei der Kupplung 3 der Sollwert des Schlupfmoments erreicht ist, wird ein Zeitglied gestartet. Wird nach Ablauf der durch das Zeitglied vorgegebenen Zeitdauer immer noch keine Rotation des Verbrennungsmotors 2 erkannt, dann wird das Schlupfmoment für den nächsten Startversuch um einen vorgebbaren Betrag als vorgebbarer Prozentsatz inkrementiert. Erfindungsgemäß wird der tatsächliche Wert des Schlupfmoments, der zu einem erfolgreichen Start geführt hatte, als nächster Sollwert vorgegeben.

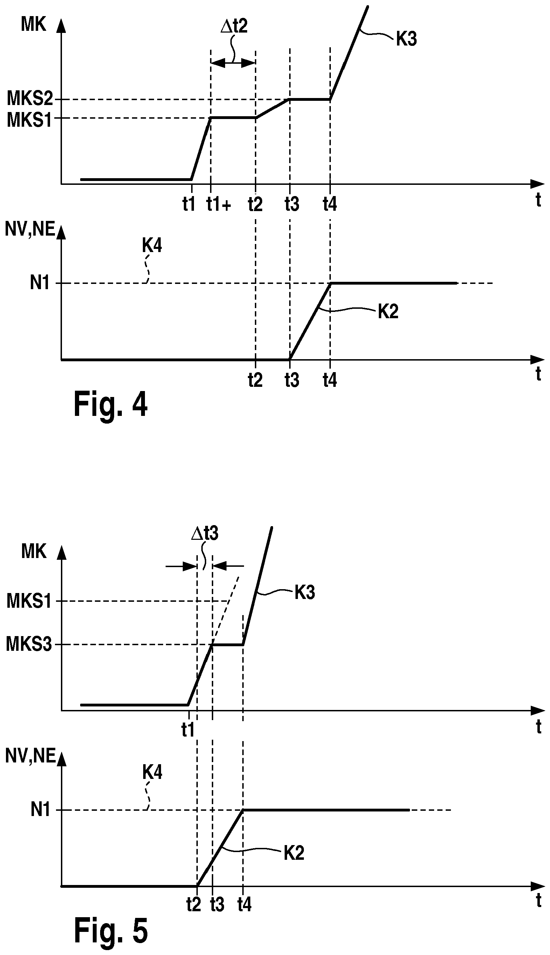

Außerdem wird bei dieser Erkennung sofort eine weitere Erhöhung des aktuellen Sollwerts des Schlupfmoments ausgelöst. Dies kann wahlweise über eine Rampe oder einen zusätzlichen Sprung des Sollwerts geschehen. Dies wird im Folgenden unter Bezug auf Figur 4 und Figur 5 dargestellt. Figur 4 zeigt wiederum, in zwei Diagrammen, jeweils das Kupplungsmoment MK und die Drehzahl N als Funktion der Zeit t. Bis zu dem Zeitpunkt t1 wird das Fahrzeug 100 nur von der elektrischen Maschine 4 angetrieben. Die Kupplung 3 (Figur 1) ist daher geöffnet und trennt den Verbrennungsmotor 2 von den übrigen Komponenten des Hybridantriebs 1. Zum Zeitpunkt t1 wird von dem Hybridantrieb 1 eine höhere Leistung gefordert, die einen Start des Verbrennungsmotors 2 erforderlich macht. Daher wird zum Zeitpunkt t1 das Schlupfmoment der Kupplung 3 angehoben, bis der Sollwert MKS1 erreicht ist. Nach Erreichen des Sollwerts MKS1 zum Zeitpunkt t1+ wird ein Zeitglied mit der Zeitdauer Δt2 gestartet. Wird nach Ablauf dieser Zeitdauer, also zum Zeitpunkt t2, immer noch keine Rotation des Verbrennungsmotors 2 festgestellt, dann wird der Sollwert MKS1 inkrementiert, um zu dem erhöhten Sollwert MKS2 zu gelangen. Mit diesem Sollwert MKS2 gelingt ein erfolgreicher Start. Denn der Verbrennungsmotor 2 wird zum Zeitpunkt t3 erfolgreich in Rotation versetzt und erreicht zum Zeitpunkt t4 die Drehzahl N1 der elektrischen Maschine 4.

Unter Bezug auf Figur 5 wird der Fall erläutert, dass der Verbrennungsmotor 2 bereits vor dem Ablauf eines durch ein Zeitglied vorgegebenen Zeitintervalls anläuft, so dass ein erfolgreicher Start zu erwarten ist. Wiederum wird davon ausgegangen, dass das Fahrzeug 100 bis zu dem Zeitpunkt t1 nur von der elektrischen Maschine 4 des Hybridantriebs 1 angetrieben wird. Zum Zeitpunkt t1 wird eine höhere Leistung gefordert, die den Start des Verbrennungsmotors 2 erforderlich macht. Demzufolge wird, beginnend mit dem Zeitpunkt t1, das Schlupfmoment der Kupplung 3 erhöht, um den vorgegebenen Sollwert MKS1 des Schlupfmoments zu erreichen. Gleichzeitig wird ein Zeitglied gestartet, das ein Zeitintervall Δt3 vorgibt. Bereits zum Zeitpunkt t2, also vor Ablauf des Zeitintervalls Δt3 und vor Erreichen des Sollwerts MKS1, wird nun aber ein Anlaufen des Verbrennungsmotors 2 festgestellt. Daraufhin wird, nach Ablauf des Zeitintervalls Δt3, also zum Zeitpunkt t3, der Sollwert des Schlupfmoments auf den niedrigeren Wert MKS3 gesetzt. Der Verbrennungsmotor 2 wird weiter beschleunigt und erreicht zum Zeitpunkt t4 die Drehzahl N1 der elektrischen Maschine 2.

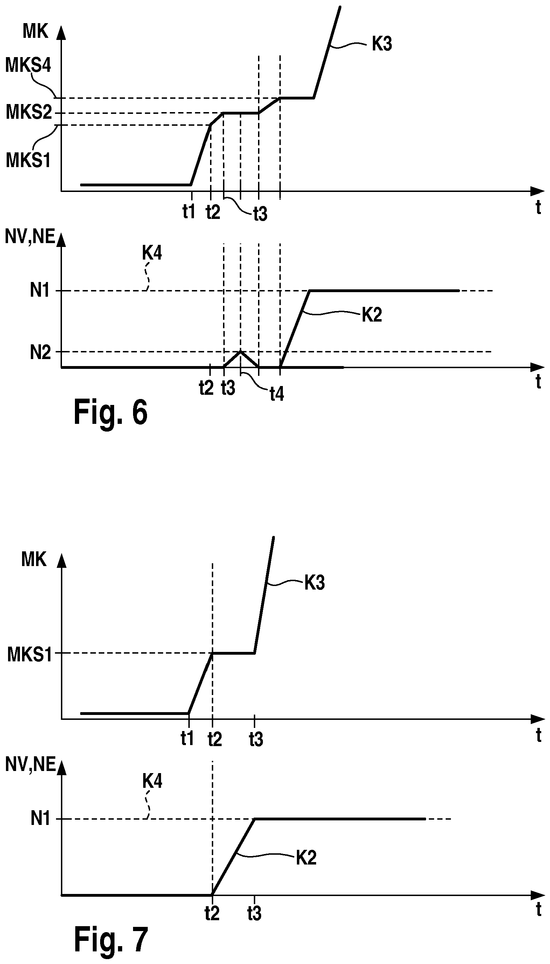

Im Folgenden wird, unter Bezug auf Figur 6, eine Ausführungsvariante erläutert, bei der während der Schlupfphase der Kupplung 3 zunächst eine Rotation des angekuppelten Verbrennungsmotors 2 erkannt wird, dessen Drehzahl aber dann wieder abfällt. Auch Figur 6 zeigt wiederum, in zwei Diagrammen, das Kupplungsmoment MK und die Drehzahlen NE, NV als Funktion der Zeit t. Wiederum werde angenommen, dass das Fahrzeug 100 bis zu dem Zeitpunkt t1 nur von der elektrischen Maschine 4 des Hybridantriebs 1 angetrieben wird. Zum Zeitpunkt t1 wird eine höhere Leistung gefordert, die den Start des Verbrennungsmotors 2 notwendig macht. Das Schlupfmoment der Kupplung 3 wird daher zunächst auf einen vorgebbaren Sollwert MKS1 erhöht, der zu dem Zeitpunkt t2 erreicht wird. Da auch mit dem Sollwert MKS1 noch kein Anlaufen des Verbrennungsmotors 2 erreicht wird, wird zum Zeitpunkt t2 der Sollwert auf den höheren Sollwert MKS2 inkrementiert. Dies führt zum Zeitpunkt t3 zu einem Anlaufen des Verbrennungsmotors 2. Die Drehzahl des Verbrennungsmotors 2 erreicht jedoch zum Zeitpunkt t4 ein vergleichsweise niedriges Maximum N2, um dann schon wieder abzufallen. Dies ist ein Hinweis auf einen nicht geglückten Startvorgang. Dieser charakteristische Ablauf kann jedoch genutzt werden, um möglichst schnell einen erfolgreicheren Start vorzubereiten. Wenn nämlich in der Schlupfphase der Kupplung 3 zunächst der Beginn einer Rotation des Verbrennungsmotors 2 erkannt wird, diese Rotation jedoch nur ein vergleichsweise niedriges Niveau erreicht, also weit unter der Drehzahl N1 der elektrischen Maschine 2 bleibt, und anschließend wieder abfällt, ist dies ein sicheres Anzeichen, dass der Verbrennungsmotor 2 nicht gestartet werden konnte. Dann wird sofort ein höheres Schlupfmoment MKS4 eingestellt, um schnellstmöglich doch noch einen Start des Verbrennungsmotors 2 zu erreichen.

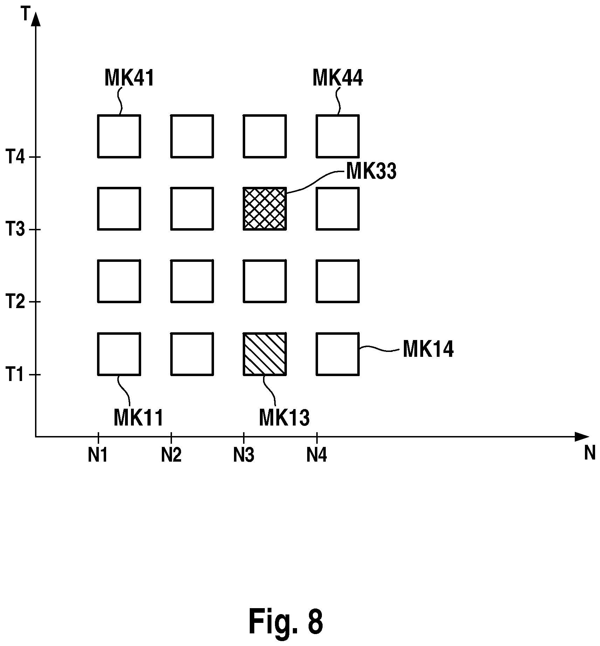

Besonders vorteilhaft ist es, die von Betriebsparametern des Fahrzeugs 100, wie beispielsweise Temperatur, Drehzahl, Alterung, abhängigen Sollwerte des Schlupfmoments in einem Kennfeld oder mehreren Kennfeldern zu speichern. Dadurch erhält man dann für verschiedene Betriebspunkte unterschiedliche Lernpunkte. Ein Ausführungsbeispiel eines derartigen Kennfelds ist in Figur 8 dargestellt. Das Kennfeld zeigt Bereiche des Schlupfmoments MK11, MK12,...MK44 in Abhängigkeit von der Drehzahl N und der Temperatur T. Beispielsweise wird bei der Drehzahl N3 und der Temperatur T1 das Schlupfmoment MK13 gewählt. Bei der Drehzahl N3 und der Temperatur T3 wird das Schlupfmoment MK33 gewählt.

Weiterhin ist es empfehlenswert, die langfristigen Adaptionswerte beim Lernen zu filtern, um zu verhindern, dass einzelne Extremwerte zu häufigem Fehlerverhalten führen.

Weiterhin sind Maßnahmen zweckmäßig, die die Lernfunktion bei besonderen Umständen deaktivieren. Ein solcher Umstand liegt beispielsweise vor, wenn der Verbrennungsmotor 2 bereits läuft, wenn ein Startvorgang eingeleitet werden soll oder wenn der Verbrennungsmotor 2 noch ausläuft.

Unter Bezug auf Figur 7 wird im Folgenden noch ein idealer Kupplungsvorgang bei einem optimalen Start erläutert. Auch Figur 7 zeigt wiederum, in zwei Diagrammen, das Kupplungsmoment MK als Funktion der Zeit t (oberes Diagramm) und die Drehzahl NE, NV als Funktion der Zeit t (unteres Diagramm). Bis zu dem Zeitpunkt t1 werde das Fahrzeug 100 wiederum nur von der elektrischen Maschine 4 angetrieben. Dann wird eine höhere Leistung gefordert, die nur von dem Verbrennungsmotor 2 erbracht erden kann. Um diesen zu starten, wird das Schlupfmoment der Kupplung 3 vergrößert, bis der Sollwert MKS1 zum Zeitpunkt t2 erreicht ist. Bei konstantem Schlupfmoment MKS1 wird der Verbrennungsmotor 2 beschleunigt bis er zum Zeitpunkt t3 die Drehzahl N1 der elektrischen Maschine erreicht. Zu diesem Zeitpunkt wird die Kupplung 3 völlig geschlossen. Ein erfolgreicher Start des Verbrennungsmotors 2 wurde erreicht.

## Patentansprüche

1. Verfahren für die Steuerung eines mindestens einen Verbrennungsmotor (2) und mindestens eine elektrische Maschine (4) umfassenden Hybridantriebs (1) eines Fahrzeugs (100), mit einer ersten, zwischen der elektrischen Maschine (4) und dem Antriebstrang (6) des Fahrzeugs (100) angeordneten Kupplung (5) und einer zweiten, zwischen der elektrischen Maschine (4) und dem Verbrennungsmotor (2) angeordneten Kupplung (3),
wobei
bei ausschließlich von der elektrischen Maschine (4) angetriebenem Fahrzeug (100)
- für einen Start des Verbrennungsmotors (2) durch die in Betrieb befindliche elektrische Maschine (4) die zweite Kupplung (3) mit einem als Sollwert (MKS1) des Schlupfmoments vorgebbaren Kupplungsmoment (K3) beaufschlagt wird und gleichzeitig ein Zeitglied gestartet wird, das ein erstes Zeitintervall (Δt3) vorgibt,
- dass die Drehzahl (NV) des Verbrennungsmotors (2) überwacht wird,
wobei
- das als Sollwert (MKS1) des Schlupfmoments vorgebbare Kupplungsmoment (K3) der zweiten Kupplung (3) um einen vorgebbaren Prozentsatz des Sollwerts (MKS1) des Schlupfmoments auf einen höheren Wert inkrementiert wird, falls die Drehzahl (NV) des Verbrennungsmotors (2) innerhalb eines weiteren zweiten vorgebbaren Zeitintervalls (Δt2), welches nach Erreichen des Sollwerts (MKS1) des Schlupfmoments für die zweite Kupplung (3) gestartet wird, unterhalb eines vorgebbaren Schwellwerts liegt und dadurch keine Rotation des Verbrennungsmotors (2) erkannt wird, wobei
- das als Sollwert (MKS1) des Schlupfmoments vorgebbare Kupplungsmoment (K3) der zweiten Kupplung (3) um einen vorgebbaren Prozentsatz des Sollwerts (MKS1) des Schlupfmoments auf einen niedrigeren Wert (MKS3) inkrementiert wird, falls die Drehzahl (NV) des Verbrennungsmotors (2) innerhalb des ersten Zeitintervalls (Δt3) oberhalb eines vorgebbaren Schwellwerts liegt und
- wobei das zu einer erforderlichen Drehzahl eines erfolgreichen Starts des Verbrennungsmotors (2) führende Kupplungsmoment der zweiten Kupplung (3) für den nächsten Startversuch des Verbrennungsmotors (2) als Sollwert (MKS1) des Schlupfmoments für die zweite Kupplung (3) vorgegeben wird.

2. Verfahren nach Anspruch 1,
**dadurch gekennzeichnet, dass**
bei Erreichen der Startdrehzahl des Verbrennungsmotors (2) vor
Ablauf des durch das Zeitglied vorgegebenen ersten Zeitintervalls (Δt3) das als Sollwert (MKS1) des Schlupfmoments vorgebbare Kupplungsmoment (K3) für die zweite Kupplung (3) auf den niedrigeren Wert (MKS3) reduziert wird.

3. Verfahren nach einem der vorhergehenden Ansprüche,
**dadurch gekennzeichnet, dass**
bei Erfassung eines kurzzeitigen Drehzahlanstiegs mit
nachfolgendem Drehzahlabfall des Verbrennungsmotors (2) das als Sollwert (MKS1) des Schlupfmoments vorgebbare Kupplungsmoment (K3) für die zweite Kupplung (3) sofort auf einen höheren Wert (MKS4) inkrementiert wird.

4. Verfahren nach einem der vorherigen Ansprüche,
**dadurch gekennzeichnet, dass** die Sollwerte (MKS1,MKS2,MKS4) des Schlupfmoments für die zweite Kupplung (3) in einem Kennfeld gespeichert werden.

5. Verfahren nach einem der vorhergehenden Ansprüche,
**dadurch gekennzeichnet, dass**
die durch Adaption mit Inkrementierung veränderten Sollwerte (MKS1,MKS3,MKS4) des Schlupfmoments für die zweite Kupplung (3) gefiltert
werden, um Extremwerte zu vermeiden.

## Claims

1. Method for controlling a hybrid drive (1), which comprises at least one internal combustion engine (2) and at least one electric machine (4), of a vehicle (100), having a first clutch (5), which is arranged between the electric machine (4) and the drivetrain (6) of the vehicle (100), and a second clutch (3), which is arranged between the electric machine (4) and the internal combustion engine (2), wherein,
in the case of the vehicle (100) being driven exclusively by the electric machine (4),
- for a start of the internal combustion engine (2) by the electric machine (4) which is in operation, a clutch torque (K3) predefinable as setpoint value (MKS1) of the slipping torque is applied to the second clutch (3), and at the same time a timer is started which predefines a first time interval (Δt3),
- in that the rotational speed (NV) of the internal combustion engine (2) is monitored,
wherein
- the clutch torque (K3), which is predefinable as setpoint value (MKS1) of the slipping torque, of the second clutch (3) is incremented by a predefinable percentage of the setpoint value (MKS1) of the slipping torque to a higher value if, within a further, second predefinable time interval (Δt2) which is started after the setpoint value (MKS1) of the slipping torque for the second clutch (3) is reached, the rotational speed (NV) of the internal combustion engine (2) lies below a predefinable threshold value and thus no rotation of the internal combustion engine (2) is detected,
wherein
the clutch torque (K3), which is predefinable as setpoint value (MKS1) of the slipping torque, of the second clutch (3) is incremented by a predefinable percentage of the setpoint value (MKS1) of the slipping torque to a lower value (MKS3) if, within the first time interval (Δt3), the rotational speed (NV) of the internal combustion engine (2) lies above a predefinable threshold value, and
wherein that clutch torque of the second clutch (3) which leads to a rotational speed required for a successful start of the internal combustion engine (2) is predefined as setpoint value (MKS1) of the slipping torque for the second clutch (3) for the next starting attempt of the internal combustion engine (2).

2. Method according to Claim 1,
**characterized in that**,
if the starting rotational speed of the internal combustion engine (2) is reached before the end of the first time interval (Δt3) predefined by the timer, the clutch torque (K3), which is predefinable as setpoint value (MKS1) of the slipping torque, for the second clutch (3) is reduced to the lower value (MKS3).

3. Method according to either of the preceding claims,
**characterized in that**,
if a brief rotational speed increase with subsequent rotational speed decrease of the internal combustion engine (2) is detected, the clutch torque (K3), which is predefinable as setpoint value (MKS1) of the slipping torque, for the second clutch (3) is immediately incremented to a higher value (MKS4).

4. Method according to any of the preceding claims,
**characterized in that**
the setpoint values (MKS1, MKS2, MKS4) of the slipping torque for the second clutch (3) are stored in a characteristic map.

5. Method according to any of the preceding claims,
**characterized in that**
the setpoint values (MKS1, MKS3, MKS4), changed by adaptation with incrementation, of the slipping torque for the second clutch (3) are filtered in order to avoid extreme values.

## Revendications

1. Procédé de commande d'une propulsion hybride (1) d'un véhicule (100), laquelle comprend au moins un moteur à combustion interne (2) et au moins une machine électrique (4) ainsi qu'un premier embrayage (5) disposé entre la machine électrique (4) et la chaîne cinématique (6) du véhicule (100) et un deuxième embrayage (3) disposé entre la machine électrique (4) et le moteur à combustion interne (2),
lorsque le véhicule (100) est entraîné exclusivement par la machine électrique (4),
- pour un démarrage du moteur à combustion interne (2) par la machine électrique (4) en fonctionnement, le deuxième embrayage (3) étant sollicité avec un couple d'embrayage (K3) qui peut être spécifié comme valeur de consigne (MKS1) du couple de glissement, et en même temps un temporisateur étant démarré qui spécifie un premier intervalle de temps (Δt3),
- en ce que la vitesse de rotation (NV) du moteur à combustion interne (2) est surveillée,
- le couple d'embrayage (K3) du deuxième embrayage (3), lequel couple peut être spécifié comme valeur de consigne (MKS1) du couple de glissement, étant incrémenté à une valeur plus élevée d'un pourcentage spécifiable de la valeur de consigne (MKS1) du couple de glissement si, dans un autre deuxième intervalle de temps spécifiable (Δt2) qui est démarré après que la valeur de consigne (MKS1) du couple de glissement pour le deuxième embrayage (3) a été atteinte, la vitesse de rotation (NV) du moteur à combustion interne (2) est inférieure à une valeur de seuil spécifiable et aucune rotation du moteur à combustion interne (2) n'est en conséquence détectée,
le couple d'embrayage (K3) du deuxième embrayage (3), lequel couple peut être spécifié comme valeur de consigne (MKS1) du couple de glissement, étant incrémenté à une valeur inférieure (MKS3) d'un pourcentage spécifiable de la valeur de consigne (MKS1) du couple de glissement si la vitesse de rotation (NV) du moteur à combustion interne (2) est supérieure à une valeur de seuil spécifiable dans le premier intervalle de temps (Δt3) et le couple d'embrayage du deuxième embrayage (3), conduisant à une vitesse de rotation requise pour un démarrage réussi du moteur à combustion interne (2), étant spécifié pour la prochaine tentative de démarrage du moteur à combustion interne (2) comme valeur de consigne (MKS1) du couple de glissement pour le deuxième embrayage (3).

2. Procédé selon la revendication 1,
**caractérisé en ce que**
lorsque la vitesse de rotation de démarrage du moteur à combustion interne (2) est atteinte avant que le premier intervalle de temps (Δt3) spécifiable par le temporisateur ne se soit écoulé, le couple d'embrayage (K3) spécifiable comme valeur de consigne (MKS1) du couple de glissement pour le deuxième embrayage (3) est réduit à la valeur inférieure (MKS3).

3. Procédé selon l'une des revendications précédentes,
**caractérisé en ce que**
lorsqu'une brève augmentation de la vitesse de rotation avec une diminution ultérieure de la vitesse de rotation du moteur à combustion interne (2) est détectée, le couple d'embrayage (K3) spécifiable comme valeur de consigne (MKS1) du couple de glissement pour le deuxième embrayage (3) est immédiatement incrémenté à une valeur plus élevée (MKS4).

4. Procédé selon l'une des revendications précédentes,
**caractérisé en ce que**
les valeurs de consigne (MKS1, MKS2, MKS4) du couple de glissement pour le deuxième embrayage (3) sont mémorisées dans un diagramme caractéristique.

5. Procédé selon l'une des revendications précédentes,
**caractérisé en ce que**
les valeurs de consigne (MKS1, MKS3, MKS4) du couple de glissement du deuxième embrayage (3) modifiées par adaptation avec incrémentation sont filtrées afin d'éviter des valeurs extrêmes.
